Europäisches Patentamt

European Patent Office

Office européen des brevets

(19)

(11) Publication number : **0 462 788 A2**

## (12) EUROPEAN PATENT APPLICATION

(21) Application number : **91305486.2**

(51) Int. Cl.⁵ : **G06F 15/72**

(22) Date of filing : **14.06.91**

(30) Priority : **18.06.90 GB 9013559**

(43) Date of publication of application :
**27.12.91 Bulletin 91/52**

(84) Designated Contracting States :
**DE FR GB**

(71) Applicant : **LINK-MILES LIMITED**
**Churchill Industrial Estate**
**Lancing, West Sussex BN15 8UF (GB)**

(72) Inventor : **Loveless, Roger Graham**
**8 Downscroft**
**Upper Beeding, West Sussex (GB)**

(74) Representative : **Jackson, David Spence et al**
**REDDIE & GROSE 16, Theobalds Road**
**London, WC1X 8PL (GB)**

(54) Apparatus for generating a visual display.

(57)   In a visual display system for a simulator, a pattern processor (20) for applying surface detail modulation to the uniform intensity values output from the simulator memory database for polygon surfaces has each tile of modulation values stored in a respective tile store (46) of eight lookup and weight units (30-37). Four different modulation values are looked up from the four units (30 to 33 or 34 to 37) of two groups and are weighted, and then summed by a respective summing circuit (28 or 29) before blending (22) and application to the modulator (11). A microinterpolation limit (39) associated with the polygon surface allows the weighting factors to bias the summing circuit outputs towards one of the respective four looked up values, thereby enhancing step-like intensity changes within the polygon.

EP 0 462 788 A2

FIG.3

This invention relates to apparatus for generating a visual display, and especially to computer generated image apparatus.

Various techniques and apparatus for computer generated images are discussed in "Computer Image Generation", edited by Bruce J. Schachter and published by John Wiley & Sons of New York in 1983, ISBN 0-471-87287-3.

One field in which computer image generation is being used is visual display systems for flight simulation systems. A typical flight simulation system has a replica of a pilot's seat and aircraft controls and instruments mounted on an enclosed platform which is moved to a limited extent to simulate changes in attitude of an aircraft in response to use of the controls by a trainee pilot in the seat and accelerations associated with changes of motion. A visual display is also mounted on the platform and presents the trainee pilot with a simulation of the view to be expected for the simulated flight, such flights being based on real possible journeys or flying conditions. The visual display may be presented by two or three display devices arranged to simulate aircraft windows through which the pilot would see the outside world.

In United Kingdom patent specification GB 2061074, an apparatus is described which is intended to be combined with a polygon-based raster scan image generator and produces a signal for creating a so-called "textured" appearance in a displayed ground plane. A polygon-based raster scan image generator is a known type of computer image generator that, by utilising the simulated aircraft position and attitude data produced by a comuter-controlled flight simulator, calculates the raster display coordinates of the boundaries of polygonal surfaces that are to form the simulated perspective view of territory or cloud being flown over, and controls the intensities of the display pixels so as to produce different assigned intensities, and usually colours, for the different surfaces. The intensity of any particular surface simulated by a polygon-based raster scan image generator acting alone is uniform over that surface, and consequently lacks the visual clues provided in real situations by the surface detail of surfaces. A well known example of the visual clues given by surface detail is the information given by the pattern formed by brick in a brick wall. GB 2061074 describes a surface detail generator which is intended to be used to modulate the intensity signal output by a polygon-based raster scan image generator so as to create perspective transformed views of a single pattern lying in the displayed ground plane only. Also, although GB 2061074 discusses a memory hierarchy of the pattern stored in a plurality of levels of detail and the selection of an appropriate level of detail by using the sample spacing computed in simulated ground distance from the effective sample spacing along a raster line as a measure, GB 2061074 does not provide any technique for avoiding banding effects which can result from the changeovers between successive levels of detail. Furthermore, GB 2061074 does not disclose any means of associating particular surface detail effects with particular surfaces defined by the output of the polygon-based raster scan image generator.

Most state of the art computer image generation systems now include means for generating surface detail, known as texture generators, that add to scene complexity and realism by adding specific surface detail to polygons. Typically these texture generators work by storing a 2-dimensional bit map of intensity values and mapping these in correct 3D perspective onto the polygons in real time. Because a bit map can be used repeatedly any number of times in the scene, texturing can provide surface detail over large areas of the display much more economically than could be achieved with polygons alone. Such a system is described in United Kingdom Patent Specification GB 2171579.

Typical surface texture effects produced are natural textures such as grass, forests and sea surfaces.

Sometimes it is desirable to create surface detail of a more man-made nature such as field patterns and urban areas. Such detail is of a more polygonal nature and implies high resolution if conventional polygons are to be used.

To use polygons for high resolution is expensive because large numbers of relatively small polygons are required.

According to the present invention, therefore, there is provided apparatus for generating a visual display, comprising first memory means storing geometrical surface data defined in relation to a respective coordinate system, and associated surface appearance data including surface intensity data, first processing means arranged to select from the data stored in the first memory means geometrical surface data and the associated surface appearance data for creating a display of a restricted two-dimensional perspective view of a region defined by observation point and attitude data supplied to the first processing means, the first processing means including input means for receiving variable observation point and attitude data, display means coupled to the first processing means for displaying the said restricted perspective view, second memory means storing surface detail data comprising a plurality of intensity modulation values each stored at a respective address corresponding to a point position in a notional plane, second processing means coupled to the first processing means to receive observation point and attitude data and to means for generating and supplying thereto pairs of display coordinates corresponding to points in the visual display, the second processing means being such as to generate for each pair of display coordinates supplied thereto a corresponding pair of coordinates substantially determined by an inverse perspective projection from the observation point to a plane defined in the respective coordinate system of the said geometrical surface data, addressing means coupling the second processing means to the second memory means so as to convert each said corresponding pair of coordinates into a predetermined plurality of respective addresses and to address the second memory means therewith, and intensity modulation means so coupling the second memory means to the display means as to cause the intensity data selected by the first processing means for a displayed point to be modulated by an intensity modulation value derived from the addressed plurality of intensity moduluation values for the same displayed point, the addressing means including means for weighting each addressed intensity modulation value with a respective geometrical weighting factor, and means for selecting the weighting factors in dependence upon a signal representative of surface detail data stored in the first memory means, the said predetermined plurality of respective addresses corresponding to a set of points in the said notional plane which define the vertices of at least one polygon containing the point defined by the said corresponding pair of coordinates determined by the inverse projection, and the respective geometrical weighting factors being related to the position of the contained point within the said polygon or polygons.

The invention will now be described in more detail, by way of example, with reference to the accompanying drawings, in which:

Figure 1 is a block schematic diagram of an apparatus embodying the invention,

Figure 2 is a diagram in perspective illustrating geometrical relationships used in processing carried out by the apparatus of Figure 1,

Figure 3 is a block diagram of circuitry for implementing part of the embodiment of Figure 1,

Figure 4 is a block circuit diagram of part of the circuitry of Figure 3,

Figures 5 is a diagram representing a data array, and

Figure 6 is a representation of intensity modulation corresponding to the array of Figure 5.

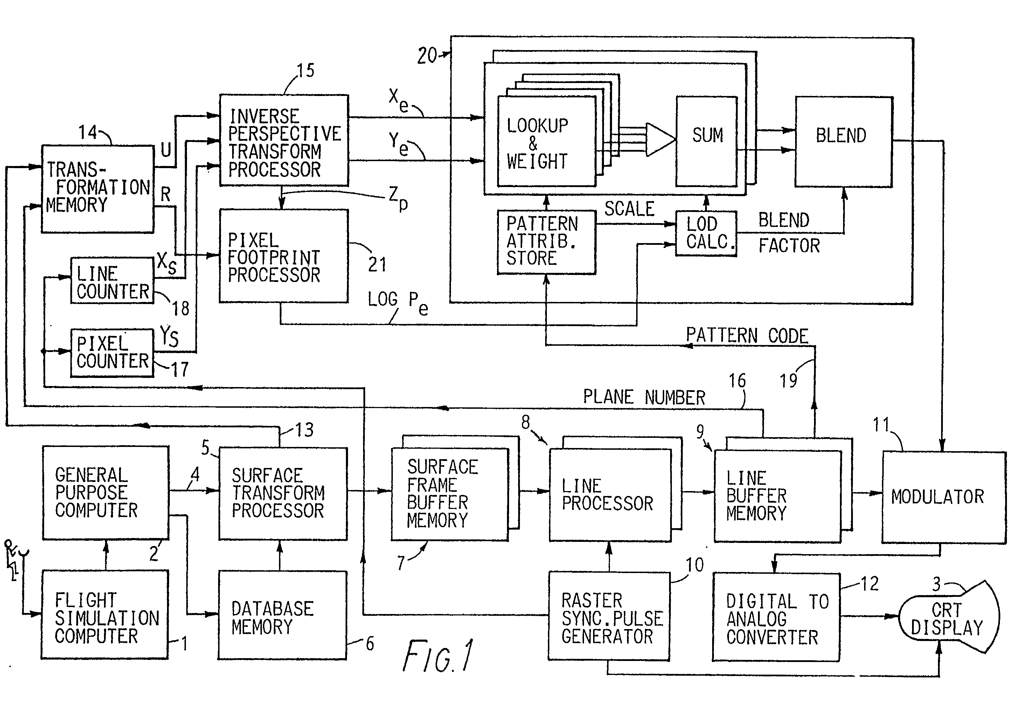

In Figure 1 of the drawings there is shown in a schematic block diagram a visual display processing system for a flight simulator having a flight simulation computer 1 which serves as the host computer in relation to the visual display processing system.

The flight simulation computer 1 controls an enclosed platform (not shown) on which a trainee pilot is seated. The trainee pilot operates a replica of the controls of a particular aircraft and the computer 1, in response to input signals developed by the replica controls, moves the platform in a manner which to some extent produces the sensation of changes in attitude and movement of the simulated aircraft. The simulation computer 1 also generates data signals representative of the longitude, latitude, altitude and attitude of the aircraft corresponding to the position and attitude of the aircraft, relative to a reference point in a reference plane, which would have resulted from the trainee pilot's operation of the replica controls. These position and attitude signals are supplied to a general purpose computer 2 which is part of the visual display processing system.

The trainee pilot is presented with a visual display of the view associated with the current position and attitude on the screen of a cathode ray tube 3. The display is generated by a raster scan, and for each frame of the display, the general purpose computer 2 generates geometrical transformation matrix data signals 4 which it supplies to a surface transformation processor 5.

A typical simulated flight is a flight from one airport to another. To provide a visual display corresponding to such a flight, the screen of the cathode ray tube 3 must show the pilot's view from take off at the first airport to landing at the second airport. The visual display processing system must be able to show correctly the view determined by any reasonably possible flight path. To limit the requirements, it is typically arranged that the pilot can be presented with a view of the ground features and sky within a 100 mile radius of a reference point, known as the runway threshold, of each airport, the view between the airports outside these limits being restricted to flight above a cloud level, so that only sky and cloud features are then displayed. The geometric data for creating polygon-based displays of the ground features and sky and cloud are held in a database memory 6 in the form of lists of coordinates for polygonal surface vertices, these coordinates being referred to as earth coordinates and being given in three dimensions $X_e$, $Y_e$ and $Z_e$ to allow for display of buildings, other noticeably three dimensional features, and a cloud base. The geometric data for overflown cloud features is also held in the database memory in a similar form. The database memory 5 also holds data assigning a value for the intensity of each polygonal surface defined by a set of vertices, and texture data in the form of a code, referred to as the pattern code, for each defined polygonal surface which indicates the texture effect to be displayed for the defined polygonal surface, and the plane number which identifies the texture plane in which the defined polygonal surface lies.

The earth coordinates for each airport have as their origin the respective runway threshold. The general purpose computer 2 is therefore arranged to supply to the surface transformation processor 5 a signal indicating the currently applicable earth coordinates orgin, together with the transformation matrix data signals which the

4

processor 5 uses to transform the earth coordinates of each surface vertex read out from the memory 5 within the earth coordinate system addressed into pilot coordinates Xp, Yp and Zp. The pilot coordinate system has the currently computed position of the pilot's eye as its origin and an angular relation to the earth coordinate system determined by the currently computed attitude, i.e. angular disposition, of the aircraft relative to the earth coordinate system. A complete list of sets of stored earth coordinates having as origin the runway threshold indicated by the general purpose computer 2 is transformed by the processor 5 into pilot coordinates. To select from the transformed coordinates those which will be used to determine the view displayed by the cathode ray tube 3, constants determined by the position of the pilot in the aircraft, the area of the window defined by the cathode ray tube 3 and the distance of the pilot's eye from the screen of the tube 3, are used by the processor 5 to reject surface vertices represented by pilot coordinates not falling within the rectangular section pyramid defined by the pilot's eye and the window. The pilot coordinates of the remaining surface vertices are then transformed by the processor 5 into intermediate screen coordinates which have as their origin the centre point of the screen of the cathode ray tube 3.

The pilot coordinates, termed Xp, Yp and Zp, have the Zp axis defined as the line from the pilot's eye through the centre of window and perpendicular to the plane of the window, the Xp coordinate being parallel to the width of the window, and the Yp coordinate being parallel to the height of the window. The screen coordinates, termed Xs and Ys are respectively parallel to the width of the window and parallel to the height of the window, both lying in the plane of the window. The window lies in the plane of the cathode ray tube screen and has the centre of the screen as its centre point. However, to compensate for a delay in the part of the processing system that produces texture signals, the height of the window is chosen to be greater than the height of the screen, the raster lines being scanned vertically.

The matrix data signals 4 generated by the computer 2 include representations of the aircraft position Xo, Yo and Zo in the applicable earth coordinate system, and a rotation matrix [H] which defines the attitude of the aircraft. The processor 6 calculates pilot coordinates Xp, Yp, Zp for each set of earth coordinates Xe, Ye, Ze as follows:

$$
\begin{bmatrix} Xp \\ Zp \\ Yp \end{bmatrix} = [H] \begin{bmatrix} Xe - Xo \\ Ye - Yo \\ Ze - Zo \end{bmatrix}
$$

where [H] is the 3 by 3 matrix defined in United Kingdom patent specification GB 2171579.

To obtain the screen coordinates $X_s$ and $Y_s$, the processor 5 calculates

$$
X_s = \frac{DXp}{Zp} \times \frac{NSL}{W} + \frac{NSL}{2}
$$

and

$$
Y_s = \frac{DYp}{Zp} \times \frac{NPE}{H} + \frac{NPE}{2}
$$

where D is the distance from the origin of the pilot coordinates to the screen along the Zp axis,

NSL is the number of scan lines across the width W of the window,

and NPE is the number of pixels along a raster line equal in length to the height H of the window.

The offset quantities $\frac{NSL}{2}$ and $\frac{NPE}{2}$ are included so that the screen coordinates $X_s$, $Y_s$ are generated having the bottom left hand corner of the window as origin as viewed by the pilot.

Since a simulated flight over three dimensional objects requires the display to show the varying appearance of, for example, buildings standing one behind the other as the aircraft flies past, the database memory 6 holds its lists of geometrical data in an order and format which enables the processor 5 to reject those surfaces which are invisible from the current position of the pilot. This facility, referred to as attributing priorities to surfaces, and its method of implementation are known to those skilled in the art.

From the sets of screen coordinates for surface vertices, the processor 5 generates a list of surface start and surface end points for each raster line. This list, together with the associated surface intensity and texture data, is written into one half of a frame buffer memory 7 for surface data. The other half of the frame buffer memory 7 contains the surface data for the preceding frame which is read by a line processor 8. The processor 8 reads the surface data one raster line at a time and writes intensity and texture information for each pixel into part of a line buffer memory 9. The writing operation by the line processor 8 is synchronised by pulses from a raster sync pulses generator 10 which also controls the timing of the raster line scans of the cathode ray tube 3, the synchronising pulses supplied to the processor 8 being generated at the pixel rate during each line. The line buffer memory 9 is capable of storing more than one line so that an intensity modulator unit 11 can read out a complete line of pixel intensity data while the processor 8 is writing another line into the buffer memory 9.

The intensity modulator unit 11 includes logic circuitry for multiplying pixel intensity values input from the line buffer memory 9 by modulating values input by the texture data generating part of the system. The modulated intensity values are supplied by the modulator unit 11 to a digital to analog converter unit 12 which supplies corresponding analog intensity signals to the cathode ray tube 3.

In the present example, the cathode ray tube 3 provides a monochrome display.

The surface transformation processor 5 supplies geometrical inverse transformation matrix data signals 13 to a transformation matrix memory 14, which represent, in the present embodiment, one of two matrices, one matrix being for transforming screen coordinates into earth coordinates in the ground plane where Ze = 0, and the other matrix being for the transforming screen coordinates into earth coordinates in the sky plane, where Ze = Zc, i.e., the height of the cloud base. Which of these two matrices is supplied to a pipelined inverse perspective transformation processor 15 is determined by a plane number signal 16 supplied to the matrix memory 14 by the line buffer memory 9. The database memory 5 includes sky plane geometric feature data associated with one plane number, the ground plane geometric feature data being associated with the other plane number. The transformation matrices required to convert the screen coordinates into earth coordinates are inverse perspective matrices.

The screen coordinates are supplied to the processor 15 by a pixel counter 17 and a line counter 18. These two counters are driven by synchronising pulses supplied by the raster sync pulse generator 10. Each raster line displayed on the screen of the tube 13 contains, for example, 768 pixels. However, the height of the window is 1024 in this case, and it is arranged that only the middle 768 pixels of data from the line buffer memory 9 are displayed on the screen. This allows sufficient time for the processing carried out by the inverse perspective transformation processor 15 and subsequent stages in the generation of texture data up to the intensity modulator 11 to be carried out in relation to the respective pixel intensity value input from the line buffer memory 9 to the intensity modulator unit 11. The first pixel to be displayed in any raster line is pixel number 128. Consequently, the value $Y_s$ = 128 is supplied by the pixel counter 17 to the processor 15 at a time exactly sufficiently in advance of the output of the intensity data for pixel number 128 by the line buffer memory 9 to ensure that the texture modulation applied to that intensity is the correct modulation for pixel number 128. This timing relationship is ensured by the signals supplied by the raster sync pulse generator 10 to the line processor 8 and the pixel counter 17. It is also arranged that the plane number signal 16 and a pattern code signal 19 which are read out from the line buffer memory 9 are those corresponding to pixels sufficiently in advance of the pixel whose intensity is currently being read by the intensity modulator unit 11. The plane number signal 16 and the pattern code signal 19 are representative of the plane numbers and pattern codes read from the database memory 6 and passed on by the processor 5 via the memory 7 and processor 8 to the line buffer memory 9 without alteration.

In addition to storing inverse transformation matrices, the transformation matrix memory 14 also stores a set of values of a constant, R, supplied by the processor 5, there being one value of R for each plane number. The values of R are

$$R = \log_2 \frac{Ps}{DZ_o}$$

where $P_s$ is the screen dimension of a pixel measured parallel to the height of the screen,

D is the perpendicular distance from the pilot's eye to the screen,

and Zo is the perpendicular distance from the pilot's eye to the texture plane concerned, i.e., in the present example, to either the ground plane or the sky plane.

The use of the values of R will be explained hereinafter.

The pipelined inverse perspective transformation processor 17 calculates the earth coordinates Xe and Ye corresponding to the pair of screen coordinates $X_s$ and $Y_s$ supplied thereto by the line counter 18 and the pixel counter 17 at every pixel.

In order to create a texture effect in the ground and sky planes, the intensity modulator unit 11 must modulate the pixel intensity data supplied from the line buffer memory 9 by varying the intensity values for pixels within each surface to be textured which lies within either the ground plane or the sky plane. To give a realistic appearance to the display, the present system takes into account the distance of the pilot from the part of the plane viewed, and the angle made between that part and the line of sight.

Modulation values are supplied to the modulator unit 11 by a pattern processor 20 that receives the calculated earth coordinates Xe and Ye from the processor 15 and another input from a procesor 21 called here the pixel footprint processor. Intensity modulation values are stored as sets of values which sets are referred to hereinafter as tiles, in the pattern processor 20. Each tile contains from one value up to a square array of 16 by 16 values and the number of values in a tile is always a power of 2. The notional area covered in the simulated ground or sky plane by a single texture tile may be used repeatedly to cover a larger area of ground or sky plane displayed.

Each tile is treated in processing as a square area of square elements, the value of the intensity modulation held within any given element being constant. The side of each element represents a length $T_e$ in feet in the earth coordinate system. Only tiles with a value of $T_e$ which is a power of 2 are stored. The power of 2 may be negative, zero, or positive.

To explain the operation of the pixel footprint processor 21, a simple example will be described in which the view presented to the pilot's eye is of a horizontal ground plane uniformly textured, at ground level, up to the horizon. The texture pattern may be grass for example. From the pilot's position, the appearance of the ground plane will be of texture in which the detail diminishes towards the horizon. $P_e$ is the length of one pixel as projected onto the ground plane. The distance from the pilot's eye to the centre of this projection is $\dfrac{Zp}{\cos\alpha}$ where $\alpha$ is the angle between the Zp axis and the line of sight. If the actual length of a pixel at the screen is $P_s$, the projection $P_n$ perpendicular to the line of sight at the distance $\dfrac{Zp}{\cos\alpha}$ is given by

$$P_n = \frac{Ps\,Zp\,\cos\alpha}{D\cos\alpha}$$

If $\beta$ is the angle between the line of sight and the ground plane,

$$P_e = \frac{Pn}{\sin\beta}$$

The relationship between $\alpha$ and $\beta$ is given by

$$\sin\beta = \frac{Zo\,\cos\alpha}{Zp}$$

where Zo is the vertical earth coordinate of the pilot's eye.
Hence,

$$P_e = \frac{Ps\,Zp.Zp\,\cos\alpha}{D\cos\alpha.Zo\,\cos\alpha}$$

$$= \frac{Ps\,Z^2p}{DZo\,\cos\alpha}$$

Cos $\alpha$ ranges from 1 at the centre of the screen to 0.878 at the corner, so that its variation is small enought to allow cos $\alpha$ to be treated as constant at 1. The equation used therefore to calculate $P_e$ is:

$$P_e = \frac{Ps\,Z^2p}{DZo}$$

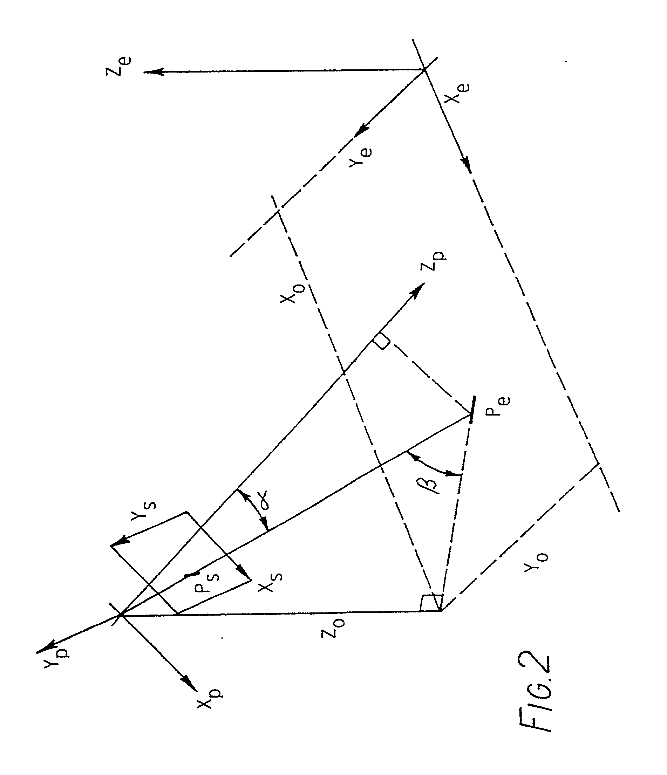

The relationships between the three sets of coordinate axes Xe, Ye and Ze, Xp, Yp, and Zp, and Xs and Ys, the screen pixel length $P_s$, the pixel length projection $P_e$ on the ground plane, the pilot's eye position Xo, Yo, Zo in the ground coordinate system, and the angles $\alpha$ and $\beta$ are illustrated in Fig. 2.

$$\log_2 P_e = 2\log Zp + [\log_2 (Ps/D) - \log_2 |Zo|]$$

The memory 14 supplies a signal of value

$$R = \log_2 (P_s/D) - \log_2 |Zo|$$

to the pixel footprint processor 21 for each frame to be displayed.

The pixel footprint signal generated by the processor 21 is represented by

$$\log_2 P_e = R + 2\log_2 Zp$$

$P_e$ represents a notional texture tile element side length. However, $P_e$ will not usually be equal to the value of $T_e$ for a tile representing the desired texture at the corresponding point in the viewed scene, since only tiles of certain values of $T_e$ are stored. The value of $P_e$ will frequently lie between two adjacent values of $T_e$ for the desired texture. In the present example, the larger of the two values of $T_e$ will be twice the smaller value of $T_e$. If $P_e = \log_2 (N+f)$ where N is an integer and f < 1, then the two values of $T_e$ between which $P_e$ lies are $2^N$ and $2^{N+1}$ feet.

The line buffer memory 9 provides one intensity value for each pixel to be displayed on the screen of the CRT display 3, and therefore the pattern processor supplies one modulating value per pixel to the intensity modulator unit 11. The pixel footprint processor 21 supplies one value of $\log_2 P_e$ per pixel to the pattern processor 20 which generates from its stored intensity modulation values two values $I_N$ and $I_{N+1}$ which are added together in different proportions by a blender circuit 22 to produce the final output intensity modulation value $I_B$ supplied to the intensity modulator unit 11. The addition carried out by the blender circuit 22, which is the output stage of the pattern processor 20, is effected in accordance with the equation

$$I_B = I_N (I-f) + I_{N+1} f.$$

$I_N$ and $I_{N+1}$ are values produced by the pattern processor 20 as weighted values derived from values looked up in tiles with $T_e$ values of, respectively, $2^N$ and $2^{N+1}$ feet.

The processor 15 receives $X_s$, $Y_s$ values from the line counter 18 and the pixel counter 17, and for every pixel, produces a pair of Xe, Ye values, and a Zp value.

The values of Xp and Yp corresponding to Xs, Ys are given by

$$Xp = \frac{W.Zp}{D.NSL} \left( Xs - \frac{NSL}{2} \right)$$

$$Yp = \frac{H.Zp}{D.NPE} \left( Ys - \frac{NPE}{2} \right)$$

The values of Xe, Ye and Ze, are related to the values of Xp, Zp and Yp by

$$\begin{bmatrix} Xe - Xo \\ Ye - Yo \\ Ze - Zo \end{bmatrix} = [H]^{-1} \begin{bmatrix} Xp \\ Zp \\ Yp \end{bmatrix} \quad \dots\dots\dots\dots (1)$$

where $[H][H]^{-1} = [I]$, the identity matrix

However, [H] is orthogonal, so that $[H]^{-1}$ is the transpose of [H].

Zo is the altitude of the aircraft measured to the pilot's eye, and Ze is the height above ground level of the point (Xe, Ye, Ze). The relationships used for applying texture to the displayed ground plane are obtained by putting $Z_e = 0$ in equation (1). For the sky plane it is necessary to treat the actual ground plane level as the sky plane, and therefore $Z_o$ is replaced by $(-|Z_e|+Z_o|)$, where $Z_c$ is the cloud base height, and $Z_e$ again put to zero, in equation (1).

Planes parallel to the ground plane but situated between the aircraft and the ground plane can also be textured if $Z_o$ is replaced in equation (1) by $Z_o - Z_s$ where $Z_s$ is the height of the plane to be textured above the ground plane, Ze again being put to zero.

From equation (1), for the ground plane,

$$- Z_o = \frac{h_{13}W.Zp}{D.NSL}(Xs - \frac{NSL}{2}) + h_{23}Zp + \frac{h_{33}H.Zp}{D.NPE}(Ys - \frac{NPE}{2})$$

Hence

$$Zp = \frac{-Z_o}{\frac{h_{13}WXs}{D.NSL} + \frac{h_{33}HYs}{D.NPE} + h_{23} - \frac{h_{13}W}{2D} - \frac{h_{33}H}{2D}}$$

It can be shown that

$$\begin{bmatrix} X_t / Zp \\ Y_t / Zp \\ 1 / Zp \end{bmatrix} = [U] \begin{bmatrix} Xs \\ Ys \\ 1 \end{bmatrix}$$

where $X_t = X_e - X_o$
and $Y_t = Y_e - Y_o$
and [U] is the 3 by 3 matrix defined in GB 2171579.

The elements of [U] are constant for each frame to be displayed, and are supplied to the processor 15 from the matrix memory 14. Xs and Ys are supplied by the line and pixel counters 18 and 17.

The processor 15 calculates

$$[U] \begin{bmatrix} X_s \\ Y_s \\ 1 \end{bmatrix}$$

then the values of $X_t$ and $Y_t$, and finally the values of Xe and Ye, the values of $X_o$ and $Y_o$ being supplied from the matrix memory 14. The value of (1/Zp) is calculated from $1/Zp = U_{31} X_s + U_{32} Y_s + U_{33}$.

For the sky plane, $Z_o$ is replaced by $(-|Z_c| + |Z_o|)$ in the equation for Zp, and hence in $U_{31}$, $U_{32}$ and $U_{33}$.

The processor 15 computes $X_e$, $Y_e$ for every pixel along a raster line starting at $Y_s = T$ where T is the delay between the input of the processor 15 and the output of the pattern processor 20.

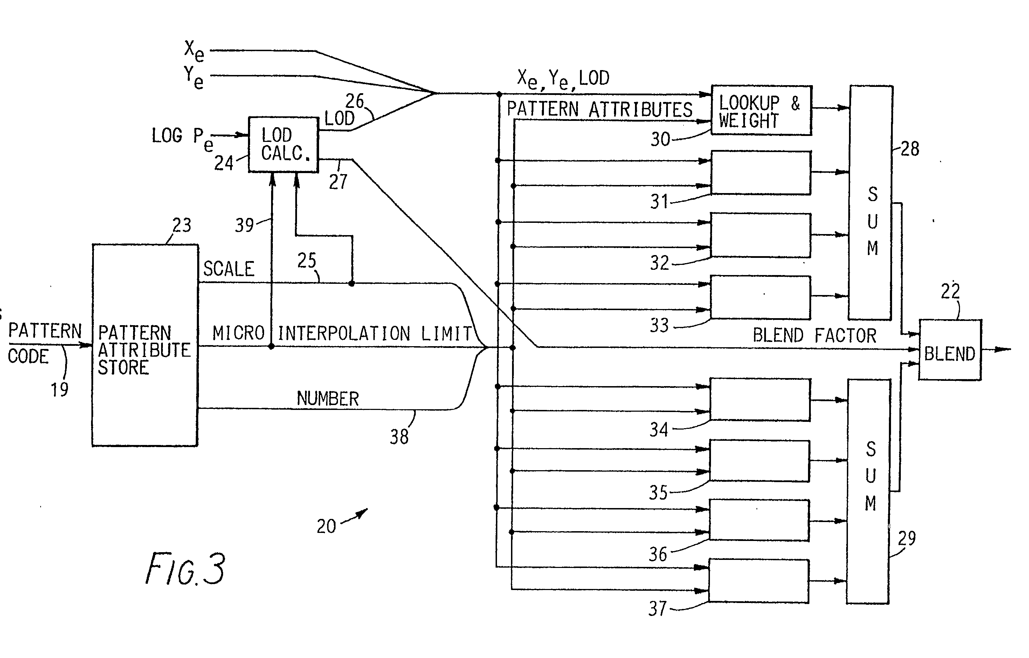

Fig. 3 shows the pattern processor 20 in more detail.

The processor 20 includes, in addition to the blender circuit 22, a pattern attribute store 23 that receives and decodes the pattern code signal 19, an LOD calculator 24 that receives the $\log_2 P_e$ signal from the pixel footprint processor 21 and a scale signal 25 from the pattern attribute store 23 and calculates an LOD signal 26 and a blend factor signal 27, two summing circuits 28 and 29 that supply the weighted values $I_N$ and $I_{N+1}$ to the blender circuit 22, and eight tile storage, addressing and value weighting units 30 to 37, referred to hereinafter as lookup and weight units, arranged as two groups of four supplying the two summing circuits 28 and 29.

Each of the lookup and weight units 30 to 37 stores the same set of tiles and receives the $X_e$ and $Y_e$ coordinate values supplied by the inverse perspective transformation processor 15, the LOD signal 26, the scale signal 25, and two other pattern attribute signals, termed the pattern number 38 and the microinterpolation limit 39.

The microinterpolation limit 39 is also supplied to the LOD calculator 24.

Each tile stored in the lookup and weight units 30 to 37 provides all the modulation values needed to produce at least part of a particular pattern at a particular resolution over an area corresponding to that of the tile. Each distinct pattern is identified, in terms of addressing within the lookup and weight unit concerned, by a pattern number.

Any one pattern may be stored in a number of different resolutions. The resolution is the result of the notional distance intended to be present between the centres of adjacent elements of a tile of the pattern, and is therefore higher the shorter this distance is. The notional distance between the centres is equal to $T_e$ for the tile in question.

All tiles stored of a given pattern represent the same notional area, regardless of their resolution. Tiles of different patterns may represent different notional areas.

The highest resolution at which patterns are represented in the lookup and weight unit is not a fired degree of resolution in terms of $T_e$. For example, it may be necessary to store some patterns at a highest resolution given by $T_e = 2^{-4}$ feet, whereas other patterns may be needed with a highest resolution no more detailed than is given by $T_e = 2^7$ feet. If the value of $T_e$ for the highest resolution is designated $T_{eMIN}$, then the scale signal 25 represents $\log_2 T_{eMIN}$.

The value of Pe is also the distance between the centres of adjacent projected pixels along an Xe, Ye plane line that is the projection of the screen raster line containing the two pixels. This value will usually not be equal to the notional distance between the centres of adjacent elements of a tile of the pattern required at the region being scanned. Consequently the projected pixel centres will not usually map onto all the tile element centres of a tile. However, since the values of $X_e$ and $Y_e$ supplied by the processor are in binary form, those bits in $X_e$ and $Y_e$ which are of lower significance than the bit position representing the magnitude of $T_e$ in the tile to be addressed are not used in addressing the tile. These lower significance bits are used in a weighting process based on the following geometrical interpolation considerations.

If $(X+\frac{1}{2}, Y+\frac{1}{2})$ are the coordinates, in whole tile elements, of the centre of the bottom left hand one of four tile elements forming a square containing the point $X_e$, $Y_e$, then $(\Delta X, \Delta Y)$ are the coordinates of that point relative to that centre. The coordinates, in tile elements, of the centres of the other three elements are $(X+\frac{1}{2}, Y+1+\frac{1}{2})$, $(X+1+\frac{1}{2}, Y+\frac{1}{2})$, and $(X+1+\frac{1}{2}, Y+1+\frac{1}{2})$.

Let the intensity modulation values at $(X+\frac{1}{2}, Y+\frac{1}{2})$, $(X+\frac{1}{2}, Y+1+\frac{1}{2})$, $(X+1+\frac{1}{2}, Y+\frac{1}{2})$ and $(X+1+\frac{1}{2}, Y+1+\frac{1}{2})$ be respectively, A, C, B and D.

The $X_e$, $Y_e$ coordinates of the point are processed as coordinates $(X+\Delta X+\frac{1}{2})$ and $(Y+\Delta Y+\frac{1}{2})$ in units of $T_e$.

The interpolation algorithm uses the values $\Delta X$ and $\Delta Y$. These are obtained by subtracting 0.5 from the

9

fractional part of the $(X+\Delta X+\frac{1}{2})$, $(Y+\Delta Y+\frac{1}{2})$ coordinates and then taking the fractional part of the result. This is done in 2's complement format so that the fractional part always has a positive value less than 1. The algorithm involves interpolating first in the X axis and then in the Y axis. X axis interpolation interpolates between A and B to give a value J and between C and D to give a value K. Y axis interpolation then interpolates between J and K to give the final interpolated modulation value T at the projected pixel centre point.

X axis interpolation:

$$J = (1-\Delta X)A + (\Delta X)B$$
$$K = (1-\Delta X)C + (\Delta X)D$$

Y axis interpolation:

$$T = (1-\Delta Y)J + (\Delta Y)K$$

In this particular implementation these equations are rearranged so that a net weighting factor can be applied to each element separately before final summation as follows:

$$T = (1-\Delta X)(1-\Delta Y)A + (\Delta X)(1-\Delta Y)B + (1-\Delta X)(\Delta Y)C + (\Delta X)(\Delta Y)D$$

To implement the interpolation algorithm, the four adjacent values A, B, C, and D must be read out for each value of $X_e$, $Y_e$. The lookup and weight units 30 to 33 read out respectively A, B, C and D, and the summing circuit 28 carries out the final addition to produce T, which in this case is $I_N$. Similarly, the lookup and weight units 34 to 37 read out respectively A, B, C, and D of a lower resolution tile of the same pattern, and the summing circuit 29 carries out addition to produce its value of T which is $I_{N+1}$.

The scale signal 25, decoded at the attribute store 23 from the pattern code, and the LOD signal 26 from the calculator 24 determine the values of $T_e$ required by the addressing circuitry of the units 30 to 37.

The LOD calculator 24 calculates the value of $\log_2 T_e$ for the resolution which the pixel footprint Pe will fit. The LOD signal 26 thus provides the power of two that relates the scale signal value of $T_{eMIN}$ to the pixel footprint value $P_e$.

$$\text{Since } P_e = 2^{(N+f)} \text{ feet, then } P_e = (T_{eMIN})(2^{n+f})$$

where n is zero or a positive or negative integer

If $N = m+n$ where m the scale signal value, then $\log_2 P_e = (m+n+f)$. The LOD signal 26 in this case represents n and is supplied to all the lookup and weight units 30 to 37. When n is zero or a positive integer, then in the units 30 to 33, the LOD signal 26 is treated as representing n, whereas in the units 34 to 37 it is treated as representing n+1, which becomes the effective LOD value in those four units. As a result, the tiles addressed in the units 30 to 33 are tiles having elements of length $2^N$ feet, whereas the tiles addressed in the units 34 to 37 are tiles having elements of length $2^{(N+1)}$ feet.

When n is a negative integer, the LOD signal 26 is treated in all the eight units 30 to 37 as representing zero.

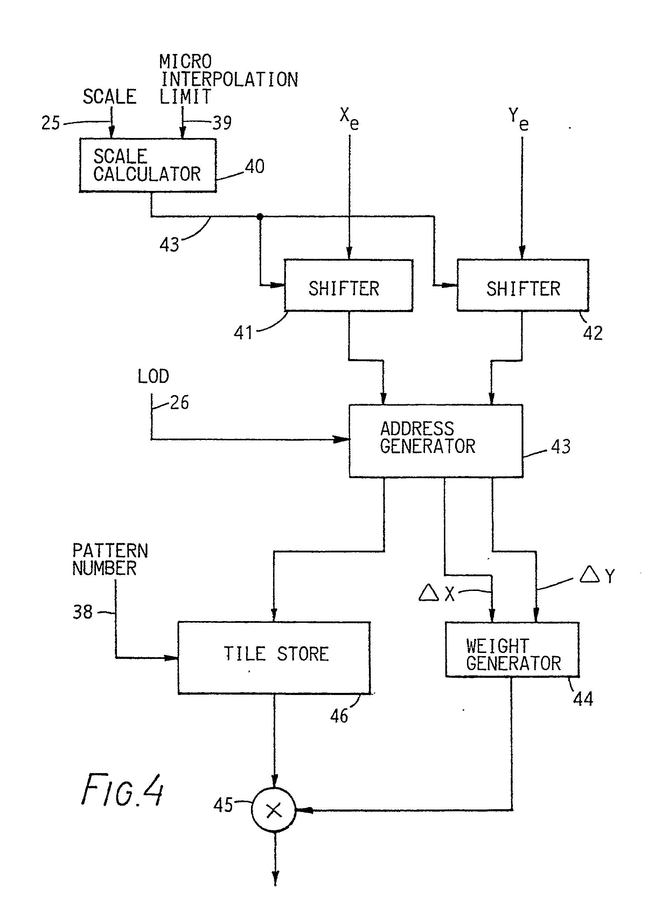

Fig. 4 is a schematic block diagram of any one of the units 30 to 37.

The scale signal 25 and the microinterpolation limit 39 are supplied to a scale calculator 40. The coordinate values $X_e$ and $Y_e$ are supplied to respective shifters 41 and 41 where each coordinate value is shifted so as to cause in each value the bit corresponding to $T_{eMIN}$ to become the bit signifying $2^0$ at the output of the shifter. This operation is carried out with the use of the scale calculator output signal 43 which is supplied to the shifters 41 and 42. The outputs from the shifters are referred to as scaled outputs. The number of bits in each scaled output, X or Y, is $s + r + m_p + 1$ where r is the precision to which interpolation is carried out, $m_p$ is the microinterpolation limit, and (s+1) is a number which is log to the base 2 of the number of intensity modulation values along one side of the notional area containing the complete pattern at its highest resolution. This area may be the area of one tile or a plurality of tiles. If the complete pattern area is rectangular, the longer side is taken.

The scaled outputs are supplied to an address generator 43 that also receives the LOD signal 26. If the LOD signal value is zero or negative, no shifting is carried out by the address generator, and the bit corresponding to $T_{eMIN}$ in each scaled output retains as its significance $2^0$. However, if the value of the LOD signal 26 is a positive integer, the value n of the LOD signal 26 is used to determine further shifting which results in the bit corresponding to $2^n$ in each scaled output being treated as signifying $2^0$.

All the bits below the bit designated $2^0$ are separated from the bits of higher significance, i.e. $2^0$ and above, $2^{-1}$ is subtracted and the remaining bits become $\Delta X$ or $\Delta Y$, if n is equal to or greater than zero, and are read to a weight generator 44 which calculates the appropriate one of the four expressions $(1 - \Delta X)(1 - \Delta Y)$, $(\Delta X)(1 - \Delta Y)$, $(1 - \Delta X)(\Delta Y)$, and $(\Delta X)(\Delta Y)$ depending upon whether the unit is unit 30 or 31 or 32 or 33, or unit 34 or 35 or 36 or 37. The result of this calculation is supplied by the weight generator 44 to a digital multiplier 45 that multiplies the intensity modulation value A or B or C or D, read out from a tile store 46, by the result from the generator 44. The output of the multiplier 45 is supplied to the summing circuit 28 or 29. The values of X and Y, which are whole numbers of tile elements, are combined to produce a relative tile element address which, if there are 256 elements in each tile, is a nine bit number.

Each tile of any given pattern is one of a set of tiles of a particular resolution, determined by their common value of $T_e$, and one of a set of tiles defining the particular pattern at a number of different resolutions. The LOD value supplied by the LOD signal 26 provides a number of higher significance bits to identity the resolution set to which the tile belongs. If the LOD signal value is any negative integer or zero, the set of tiles having the highest resolution, for the pattern concerned, is indicated. The combined LOD-derived bits and relative tile element address are supplied to the tile store 46 where they are combined with the pattern number 38 which identifies the pattern set to which the tile belongs. Thus the complete tile address in the store 46 is formed by the combination of the pattern number 38 to identity the pattern, the LOD value to identify which resolution of the particular pattern is to be used, and the relative tile element address. The pattern number 38 and LOD value identify the particular tile to be read, and the relative tile element address identifies the particular element to be read within that tile.

Each polygonal surface defined in the database memory 6 has an associated pattern number that is encoded in the pattern code which is transmitted as the pattern code signal 19 to the pattern attribute store 23. To produce non-texture surface detail within a polygonal, a non-zero value of the microinterpolation limit 39 is encoded in the pattern code and is supplied to the LOD calculator 24 and to each lookup and weight unit 30 to 37.

In the LOD calculator 24, a non-zero value of the microinterpolation limit 39 allows the integer value of $\log_2 P_e$, used as the LOD value, to be a negative integer up to a limit $(-m_p)$ where $m_p$ is the value of the microinterpolation limit. The blend factor is calculated in the same way as it is when the LOD value is positive. The effect of a negative value of LOD at the address generator 43 is to cause all the bits in $\Delta X$ from $2^{-1}$ to $2^{-k}$, and all the bits in $\Delta Y$ from $2^{-1}$ to $2^{-k}$ to be treated as zeros where the LOD value is $(-k)$. Consequently $\Delta X$ and $\Delta Y$ have values which are given by their $2^{-(1+k)}$ to $2^{-(r+k)}$ bits. Geometrically this is equivalent to moving the projected pixel centre towards the intensity modulation value A at $(X+\frac{1}{2}, Y+\frac{1}{2})$, by an amount that increases with the magnitude of k. Thus the resultant interpolated intensity modulation value is biased towards the value A. The visible effect of this is to emphasise step-like changes in intensity where they occur over a distance equal to the length of a tile element. The value of the microinterpolation limit is chosen to ensure that there is always sufficient smoothing to prevent aliassing. The bits for X and Y, which form the relative tile element address, remain the same as for the zero value of LOD, i.e. the highest resolution of the pattern. Consequently although the value of the LOD signal 26 is increased by +1 in the units 34 to 37, to the value (1- k), the same four tile element values A, B, C and D are read out in the units 34 to 37 as in the units 30 to 33. However, if the bits for $\Delta X$ and $\Delta Y$ in units 30 to 33 are $2^{-(1-k)}$ to $2^{-(r+k)}$, then the bits for $\Delta X$ and $\Delta Y$ in units 34 to 37 are $2^{-(1+k-1)}$ to $2^{-(r+k-1)}$ so that the blender circuit 22 receives slightly less rapidly changing signals from the summing circuit 29 than from the summing circuit 28. The blender circuit 22 therefore provides an extra slight shading effect at boundaries between tile elements having contrasting values, the amount of extra shading diminishing as the magnitude of k increases up to the limit $m_p$.

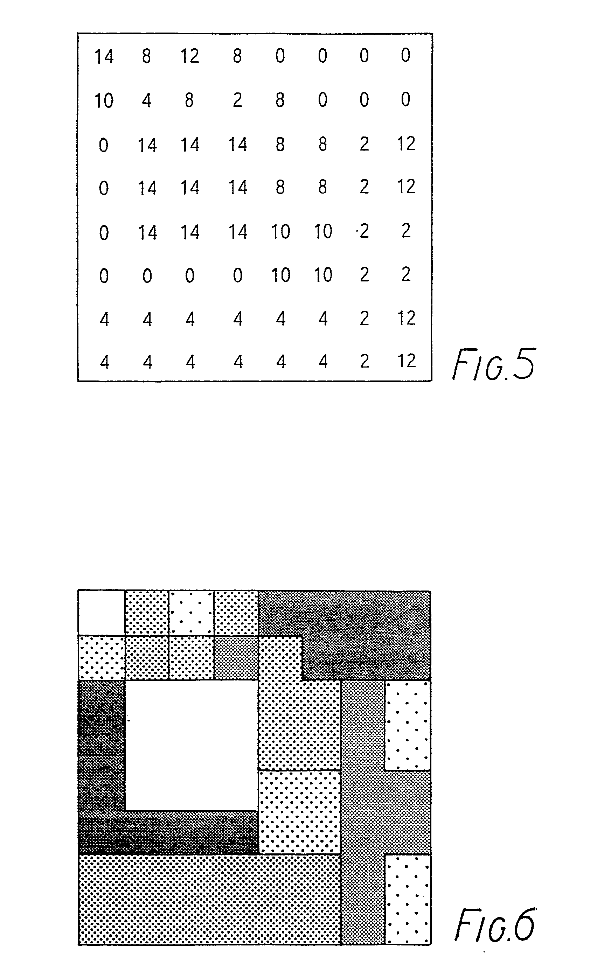

Figs. 5 and 6 illustrate an 8 by 8 array of tile element values and the corresponding square polygonal surface with the interior detail produced by microinterpolation of the tile element values.

The microinterpolation technique described hereinbefore can be used in an embodiment of the invention described and claimed in our copending European patent application No. 91303025.

Data can be loaded into the stores 46 from the flight simulation computer 1 or the general purpose computer 2 over a data bus (not shown) for each runway threshold or other reference point, as will be apparent to those skilled in the art, to whom it will also be obvious that by having three pattern processors and making other obvious modifications, full colour visual display can be provided.

## Claims

1. Apparatus for generating a visual display, comprising first memory means (6) storing geometrical surface data defined in relation to a respective coordinate system, and associated surface appearance data including surface intensity data, first processing means (2, 5) arranged to select from the data stored in the first memory means (6) geometrical surface data and the associated surface appearance data for creating a display of a restricted two-dimensional perspective view of a region defined by observation point and attitude data supplied to the first processing means (2, 5), the first processing means (2, 5) including input means for receiving variable observation point and attitude data, display means (3) coupled to the first processing means (2, 5) for displaying the said restricted perspective view, second memory means (46) storing surface detail data comprising a plurality of intensity modulation values each stored at a respective address corresponding to a point position in a notional plane, second processing means (15) coupled to the first processing means (2, 5) to receive observation point and attitude data and to means (10, 17, 18) for generating and supplying thereto pairs of display coordinates corresponding to points in the visual display, the second processing means (15) being such as to generate for each pair of display coordinates supplied thereto a corresponding pair of coordinates substantially determined by an inverse perspective projection from the observation point to a plane defined in the respective coordinate system of the said geometrical surface data, addressing means (41, 42, 43) coupling the second processing means (15) to the second memory means (46) so as to convert each said corresponding pair of coordinates into a predetermined plurality of respective addresses and to address the second memory means (46) therewith, and intensity modulation means (11) so coupling the second memory means (46) to the display means (3) as to cause the intensity data selected by the first processing means (2, 5) for a displayed point to be modulated by an intensity modulation value derived from the addressed plurality of intensity moduluation values for the same displayed point, the addressing means (41, 42, 43) including means (44, 45) for weighting each addressed intensity modulation value with a respective geometrical weighting factor, and means (41, 42, 43) for selecting the weighting factors in dependence upon a signal (39) representative of surface detail data stored in the first memory means (6), the said predetermined plurality of respective addresses corresponding to a set of points in the said notional plane which define the vertices of at least one polygon containing the point defined by the said corresponding pair of coordinates determined by the inverse projection, and the respective geometrical weighting factors being related to the position of the contained point within the said polygon or polygons.

2. Apparatus according to claim 1, wherein the second memory means and the addressing means (30-37) are such that two said polygons are defined and the weighting factors are different for the two polygons.

3. Apparatus according to claim 1, wherein the addressing means are such that in response to at least one predetermined value of the said signal (39) representative of surface detail data, the two said polygons are identical.

4. Apparatus according to any preceding claim, wherein the addressing means is such that the or each polygon is defined by four vertices.

5. Apparatus for generating a visual display, comprising first memory means (6) storing geometrical surface data defined in relation to a respective coordinate system, and associated surface detail data including surface intensity data, first processing means (2, 5) arranged to select from the data stored in the first memory means (6) geometrical surface data and the associated surface appearance data for creating a display of a restricted two-dimensional perspective view of a region defined by observation point and attitude data supplied to the first processing means (2, 5), the first processing means (2, 5) including input means for receiving variable observation point and attitude data, display means (3) coupled to the first processing means (2, 5) for displaying the said restricted perspective view, second memory means (46) storing surface detail data comprising a plurality of intensity modulation values each stored at a respective address corresponding to a point position in a notional plane, second processing means (15) coupled to the first processing means (2, 5) to receive observation point and attitude data and to means (10, 17, 18) for generating and supplying thereto pairs of display coordinates corresponding to points in the visual display, the second processing means (15) being such as to generate for each pair of display coordinates supplied thereto a corresponding pair of coordinates substantially determined by an inverse perspective projection from the observation point to a plane defined in the respective coordinate system of the said geometrical surface data, addressing means (41, 42, 43) coupling the second processing means (15) to the second memory means (46) so as to convert each said coresponding pair of coordinates into a predetermined plurality of respective addresses and to address the second memory means (46) therewith, and intensity modulation means (11) so coupling the second memory means (46) to the display means (3) as to cause the intensity data selected by the first processing means (2, 5) for a displayed point to be modulated by an intensity modulation value derived from the addressed plurality of intensity modulation values for the same displayed point, the addressing means (41, 42, 43) including means (44, 45) for weighting each addressed intensity modulation value with a respective weighting factor, and means (41, 42, 43) for selecting the weighting factors in dependence upon a signal (39) representative of surface detail data stored in the first memory means (6), the said predetermined plurality of respective addresses corresponding to a set of points in the said notional plane which define the vertices of a polygon containing the point defined by the said corresponding pair of coordinates determined by the inverse projection, and the weighting factors being selectable to bias the said derived intensity modulation value towards a value at one of the said predetermined plurality of respective addresses.

12

6. Apparatus for generating a visual display, substantially as described hereinbefore with reference to the accompanying drawings.

FIG.1

EP 0 462 788 A2

FIG.2

FIG.3

FIG.4

| | | | | | | | |
|----|----|----|----|----|----|----|----|
| 14 | 8  | 12 | 8  | 0  | 0  | 0  | 0  |
| 10 | 4  | 8  | 2  | 8  | 0  | 0  | 0  |
| 0  | 14 | 14 | 14 | 8  | 8  | 2  | 12 |
| 0  | 14 | 14 | 14 | 8  | 8  | 2  | 12 |
| 0  | 14 | 14 | 14 | 10 | 10 | ·2 | 2  |
| 0  | 0  | 0  | 0  | 10 | 10 | 2  | 2  |
| 4  | 4  | 4  | 4  | 4  | 4  | 2  | 12 |
| 4  | 4  | 4  | 4  | 4  | 4  | 2  | 12 |

FIG.5

FIG.6